(19) Europäisches Patentamt / European Patent Office / Office européen des brevets

(11) **EP 2 137 099 B1**

(12) **EUROPEAN PATENT SPECIFICATION**

(45) Date of publication and mention of the grant of the patent:
**14.08.2013 Bulletin 2013/33**

(21) Application number: **08746040.8**

(22) Date of filing: **17.04.2008**

(51) Int Cl.:
*C01B 3/38* (2006.01)    *C01B 3/32* (2006.01)

(86) International application number:
**PCT/US2008/060548**

(87) International publication number:
**WO 2008/131049 (30.10.2008 Gazette 2008/44)**

(54) **HYDROGEN PRODUCTION PROCESS**

VERFAHREN ZUR HERSTELLUNG VON WASSERSTOFF

PROCÉDÉ DE PRODUCTION D'HYDROGÈNE

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **18.04.2007 US 912495 P**
**12.02.2008 US 29826**

(43) Date of publication of application:
**30.12.2009 Bulletin 2009/53**

(73) Proprietors:
• **L'AIR LIQUIDE SOCIETE ANONYME POUR L'ETUDE ET L'EXPLOITATION DES PROCEDES GEORGES CLAUDE**
**75007 Paris (FR)**
• **Sued-Chemie, Inc.**
**Louisville, KY 40210 (US)**

(72) Inventors:
• **LOMAX, Franklin, D.**
**Falls Church, VA 22044 (US)**
• **LYUBOVSKY, Maxim**
**Alexandria, VA 22315 (US)**
• **ZAKARIA, Rama**
**Gaithersburg, MD 20879 (US)**
• **WAGNER, Jon, P.**
**Louisville, KY 40241 (US)**
• **RATNASAMY, Chandra**
**Louisville, KY 40245 (US)**

(74) Representative: **Ilgart, Jean-Christophe et al BREVALEX**
**95 rue d'Amsterdam**
**75378 Paris Cedex 8 (FR)**

(56) References cited:
| | |
|---|---|
| EP-A- 1 586 535 | US-A- 4 631 182 |
| US-A1- 2002 115 733 | US-A1- 2004 014 826 |
| US-A1- 2005 232 857 | US-A1- 2005 232 857 |
| US-A1- 2006 009 352 | US-A1- 2006 013 759 |
| US-A1- 2006 013 759 | US-A1- 2006 090 398 |
| US-B1- 7 037 485 | |

EP 2 137 099 B1

**Description**

BACKGROUND OF THE INVENTION

FIELD OF THE INVENTION

The present invention relates to processes for producing hydrogen. In particular, the present invention relates to processes for producing hydrogen through steam reforming.

DISCUSSION OF THE BACKGROUND

Hydrogen production is typically performed through catalytic steam reforming. The general reaction for catalytic steam reforming is as follows:

$$C_xH_yO_z + (x-z)H_2O \xrightarrow{\text{catalyst}} xCO + \left(x - z + \frac{y}{2}\right)H_2$$

Steam reforming is an endothermic reaction carried out either in heat exchange reactors, or by other means where substantial heat may be transferred to the reacting fluid, such as in the case of autothermal reforming, where a portion of the feedstock is combusted inside the reactor to provide heat for steam reforming either subsequently or in the same location as the combustion. If hydrocarbon or alcohol feedstocks enriched in compounds with two or more carbon atoms per molecule (C2+ hydrocarbons) are used for hydrogen generation, the risk of catalyst deactivation by carbon deposition is greatly increased. In order to minimize the risk of carbon deposition, existing hydrogen production processes employ at least one adiabatic catalytic reactor prior to the heated reactor. These adiabatic reactors are referred to as pre-reformers.

In existing hydrogen production processes employing pre-reformers, the hydrocarbon feedstock is mixed with 1 to 5% hydrogen by volume, then is subjected to a hydrodesulphurization (HDS) pre-treatment step to remove sulphur. The feedstock hydrocarbons are then mixed with superheated steam in a ratio determined by the average molecular weight of the feedstock molecules. Natural gas or other feedstocks where the average carbon number is less than two are processed with a molar steam to carbon ratio between 3:1 and 5:1. Higher molecular weight feedstocks are often processed with steam to carbon ratios as much as twice as high. These high steam flowrates are used to suppress carbon formation, and enhance the steam reforming reaction. High steam to carbon ratios disadvantageously increase energy usage in the hydrogen production process.

Because the reaction rates for steam reforming are low at the pre-reforming feed temperatures of 400°C to 500°C, pre-reforming catalysis are prepared with very high metal loadings, above 10% by weight, and high metal surface areas. These high metal surface areas present several disadvantages. First, they are subject to rapid sintering and reduction of activity if feedstock temperature is not controlled very closely. Second, they present substantial safety risk due to their pyrophoric reaction with oxygen, especially when nickel metal is used, thus necessitating great care in handling the catalysts during reduction and subsequent operation. Further, even at the elevated steam to carbon ratios employed in existing hydrogen production processes using pre-reformers for C2+ feedstocks, deactivation by carbon deposition remains a problem. Typically, volatile alkali or alkali-silicate promoters are added to suppress carbon deposition, as described by Twigg, et al. Catalyst Handbook: 2nd Edition, Manson Publishing, Ltd. 1996, pp. 250-253, the contents of which are hereby incorporated by reference. These promoters are very effective, but disadvantageously reduce catalyst reaction rate, necessitating larger pre-reforming reactors. Further, the promoters tend to volatilize and subsequently deposit on downstream catalysts and equipment. This causes deactivation of downstream catalysts and potential corrosion damage to equipment, both of which may lead to serious operation problems such as hot banding of reformer tubes, carbon deposition and eventual tube failure. Further, the protective effects of the alkali promoters are lost after they are volatilized, such that eventual catalyst failure is assured in existing pre-reformers. Upon failure, the highly-reactive catalyst must be safely removed from the reactor and replaced.

US-B1-7,037,485 discloses a steam methane reforming method in which a feedstream is treated in a reactor containing a catalyst that is capable of promoting both hydrogenation and partial oxidation reactions. Thus, the reaction disclosed in said document is a dual mode catalytic reaction.

US-A1-2006/0009352 discloses a promoted calcium-alumina supported reforming catalyst for synthesis gas generation. The composition of said catalyst requires the combination of calcium oxide with alumina onto which a promoter and an active metal are added.

There is a need for an improved hydrogen production method that can process feedstocks containing 20% or more of molecules having at least two carbon atoms each without being deactivated by carbon deposition.

SUMMARY OF THE INVENTION

The present invention provides an improved hydrogen production method, for processing feedstocks containing propane which is not deactivated by carbon deposition.
It is a further object of the present invention to reduce steam requirements below five moles of steam for every carbon atom bound in a hydrocarbon or oxygenated hydrocarbon molecule in the feedstock, for those feedstocks comprising propane.
It is a further object of the present invention to provide a catalyst especially well-suited for use in the hydrogen production method of the present invention.
These and other objects of the present invention, individually or in combinations thereof, have been satisfied by the discovery of a hydrogen production process as disclosed in claim 1.
Preferred embodiments of the process of the present invention are disclosed in dependent claims 2 to 12.

BRIEF DESCRIPTION OF THE DRAWINGS

The present invention may be better understood by reference to the figures.

FIG. 1 is a schematic diagram of a hydrogen production process
FIG. 2 is a propane conversion versus time plot for catalysts according to the present invention.

DETAILED DESCRIPTION OF PREFERRED EMBODIMENTS

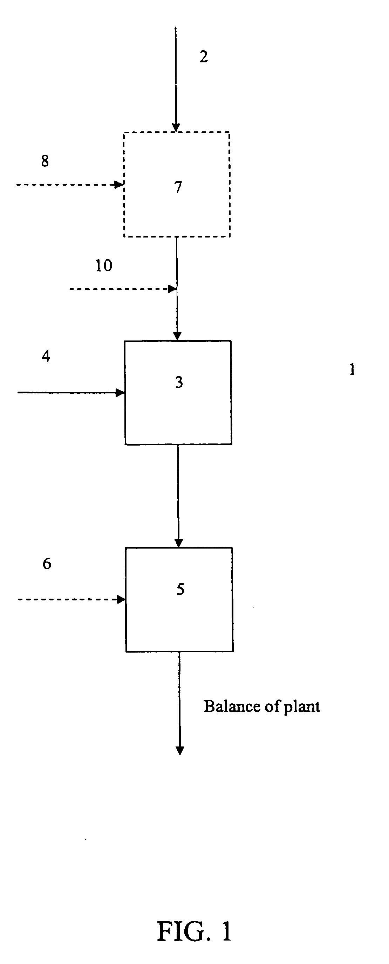

The present invention relates to a hydrogen production process comprising combining a first feedstream and a second feedstream to produce, in a pre-reforming reactor, a first product stream comprising $CH_4$ and $H_2O$. The first feedstream comprises a mixture of $H_2$ and at least one member selected from the group consisting of hydrocarbons having two or more carbon atoms and alcohols having two or more carbon atoms, the mixture having a hydrogen stoichiometric ratio ($\lambda$) of at least 0.1. The first product stream is fed into a reforming reactor and reacted in the reforming reactor to produce a second product stream comprising CO and $H_2$.
It is noted that within the context of the present invention the designations "first feedstream" and "second feedstream" are used to distinguish the two feedstreams, but does not designate their order of addition into the pre-reforming reactor. Hence the "first feedstream" can be introduced into the pre-reforming reactor either before, after or simultaneously with the "second feedstream" or the first and second feedstreams can be combined prior to introduction into the pre-reforming reactor as a single combined feed.
The process of the present invention will be further described with reference to the Figures. FIG. 1 shows a typical hydrogen production process 1, in which feedstock gas 2 (the first feedstream of the present invention) is co-fed to pre-reforming reactor 3 with steam 4 (the second feedstream of the present invention). The product from the pre-reforming reactor (first product stream of the present invention) is subsequently fed to the reforming reactor 5, with or without the additional feed 6. Additional feed 6 may include further steam injection, air or other non-air oxidant injection, mixtures of desulphurized gases such as hydrocarbons, carbon oxides, inerts, etc., for instance as is practiced in reforming for the production of synthesis gas. The product from the reformer (second product stream of the present invention) then exits the reforming reactor 5 to the balance of the plant. Optionally, the feedstock gas 2 can be treated in a desulphurizing process 7. If the feedgas possesses bound organic sulphur compounds such as mercaptans, thiols, etc. then the desulphurizing process 7 usually includes a hydrogenation step, and a hydrogen-containing gas 8 is added to the feedgas to facilitate sulphur removal. The generalized hydrogen production process 1 illustrated in FIG. 1 can be used to describe both the prior art hydrogen production process for C2+ feedstocks and the present invention. The pre-reforming reactor 3 is operated at temperatures from 350° C to 600° C inlet temperature both in the present invention and in the prior art. For best freedom from sulphur poisoning, the pre-reformer of the present invention may be operated at temperatures of 400° C or higher. For best freedom from coke formation in the preceding heat exchange steps, the reactor may be operated at or below 550° C. Operating pressures for pre-reforming reactors in the prior art and the present invention may be between atmospheric pressure and 50 MPa. Common industrial embodiments are operated between essentially atmospheric pressure and 5 MPa. These typical operating conditions are recited in Twigg, *supra,* and Rostrup-Nielsen, J.R., Catalytic Steam Reforming, Reprint from Catalysis-Science and Technology, Springer-Verlag, 1984, hereby incorporated by reference, among other sources.
In the present invention, the amount of hydrogen contained in the feedstock gas 2 is increased compared to prior-art processes. The proportion of hydrogen employed in the feedstock 2 can be best described by a hydrogenation stoichiometric ratio, or hydrogen stoichiometric ratio, or hydrogen stoichiometry (hereafter "hydrogen stoichiometry"), X, for the hydrogenation reaction of a given hydrocarbon to methane. To define $\lambda$, it is convenient to represent the average chemical composition of the feedstock molecules in a feed mixture containing hydrocarbons and oxygenated species as $C_xH_yO_z$, where

$$x = \sum_i n_i x_i$$

$$y = \sum_i n_i y_i$$

$$z = \sum_i n_i z_i$$

and

i is the number of molecular species in the mixture;

$n_i$ is the mole fraction of the i-th molecular species in the mixture; and $x_i$, $y_i$ and $z_i$ are the mole fractions of C, H and O, respectively, in the i-th molecular species. The hydrogen stoichiometry, $\lambda$, is then defined in terms of molar flow rates, F, to the hydrogen production process as follows:

$$C_xH_yO_z + \left(2x - \frac{y}{2} + z\right)H_2 \xrightarrow{\;catalyst\;} xCH_4 + zH_2O$$

$$\lambda = \frac{F_{H_2}}{F_{C_xH_yO_z}\left(2x - \frac{y}{2} + z\right)}$$

For typical hydrocarbon feedstocks, molecules containing other atoms such as nitrogen or sulphur may be present, but the concentration of these molecules is not normally high. Prior-art pre-reformers operating with 1% to 5% di-hydrogen by volume as a ratio to the hydrocarbon feed, for a nominal propane feed ($C_3H_8$) would possess a hydrogen stoichiometry, $\lambda$, of between 0.005 and 0.026.

In an embodiment of the present invention, $\lambda$ is greater than or equal to 0.2, and also less than or equal to 1.5. In another embodiment of the present invention, $\lambda$ is greater than or equal to 0.25, and also less than or equal to 1. The increased amount of hydrogen in the method of the present invention may be added prior to the desulphurizing process 7 as part of hydrogen-containing gas 8, or it may be added prior to the pre-reforming reactor 3 as stream 10. Further, distributed injection of the hydrogen may be practiced through the pre-reformer 3. The relative amounts of hydrogen added at any of these locations does not limit the application of the present invention.

As noted above, when the level of added hydrogen is at very low hydrogen stoichimetry (i.e. $\lambda$ is less than 0.1), the catalyst gets deactivated by carbon formation. At very high hydrogen stoichiometry (i.e. $\lambda$ is greater than 1.5), the equilibrium for the subsequent steam methane reforming and water gas shift reactions is adversely affected according to Le Chatelier's principle. However, the present inventors have found that by adding molecular hydrogen ($H_2$) in the present range (i.e. $0.2 < \lambda < 1.5$), catalyst deactivation is suppressed while also leading to rapid reaction of C2+ molecules to C1 (methane) product.

The addition of hydrogen in the amounts of the present invention advantageously promotes the hydrogenation reaction. This reaction is exothermic, whereas the steam reforming reaction is endothermic. Thus, the method of the present invention advantageously compensates for the usual drop in temperature, and thus reaction rate, observed in traditional methods. Furthermore, the method of the present invention can advantageously be employed to obtain a temperature increase in the pre-reforming reactor 3. This temperature increase promotes both the hydrogenation reaction rate and both the rate and equilibrium limits to the steam reforming reaction. Thus, the present method advantageously increases conversion of C2+ hydrocarbons and alcohols via hydrogenation while also enhancing the rate and extent of conversion possible through the steam reforming reaction in the same reactor.

The catalyst used in the present process is a catalyst having /T an active component supported on a non-reducible oxide support, with a composition as from claim1. The support of the preferred catalyst has a preferred surface area of from 10 to 250 $m^2$/g, support of the preferred catalyst preferred of preferably from 80 to 180 $m^2$/g.

The oxide support of the preferred catalyst can optionally include one or more surface area stabilizers. Suitable surface area stabilizers include, but are not limited to, REO (La, Ce, Pr, Nd, Sm), Zr, Y, Ti, Sc and combinations thereof. Such stabilizers can be present in the support in an amount from 0 to 30% by weight, preferably from 5 to 20% by weight, based on amount of support.

The preferred catalyst formulation can be provided in any desired physical form. Preferably the supported catalyst is in a form selected from the group consisting of powders, granulates, tablets, extrudates, and washcoats on ceramic or metallic monoliths or tubular structures.

In a further embodiment of the present invention, the present process is performed with a molar ratio of steam per carbon atom in the first feedstream, S:C, that is less than 5, preferably less than 4, more preferably between 3 and 4. By using the hydrogen stoichiometry required in the present invention, the present process enables the use of a hydrocarbon feedstocks having higher molecular weight (more carbon atoms per molecule), with low steam to carbon ratios being useable.

EXAMPLES

The following Examples illustrate certain specific embodiments of the disclosed invention and should not be construed as limiting the scope of the invention as many variations are possible within the disclosed invention, as will be recognized by those skilled in the art.

Example 1 (Comparative)

Propane was used as hydrocarbon feedstock having three carbon atoms. A reactor vessel having 1.4" ID was loaded with 10g of catalyst having 1wt% Ir deposited on a non-reducible oxide support comprising barium hexaaluminate, making an approximately 1 cm deep catalyst bed. The pre-reforming reaction was conducted under nearly adiabatic conditions. Two ~2 cm deep layers of 3 mm glass beads were placed below and above the catalyst bed to provide uniform flow of reacting gas through the bed. Two thermocouples were installed just below and above the catalyst bed to measure the temperature differential across the catalyst.

The reactor was placed in a furnace and the furnace temperature was set constant at 450°C. Propane and steam flows were constant at a molar steam to carbon ratio, or S:C = 3.7. Hydrogen flow was changed stepwise between between hydrogen stoichiometry $\lambda$ of 1.5, 1, 0.5, 0.25 and 0.13 . Overall gas space velocity was approximately 35,000 1/hr. The reactor was stabilized for about 1 hour at each step before acquiring a sample of the reformate gas and switching to the next setting for $H_2$ flow. After the first set of testing the catalyst was aged overnight under the reaction conditions with highest hydrogen flow and then the measurements were repeated the next day. Table 1 shows conversion of $C_3H_8$ into $C_1$ species ($CH_4$ and $CO_2$, below detectable amounts of CO were observed for all samples) and $\Delta T$ between inlet and outlet ($T_{in}$-$T_{out}$)of the catalyst (negative sign indicates temperature increase over the catalyst). Increasing negative values of $\Delta T$ indicate a high degree of the exothermic methanation reaction whereas high positive values of $\Delta T$ indicate endothermic steam reforming reaction dominates the observed conversion of the propane feedstock.

Table 1

| Hydrogen stoichiometry, $\lambda$ | $C_3H_8$ conversion | $\Delta T$ |
|---|---|---|
| 1.5 | 95 | -56 |
| 1 | 93 | -47 |
| 0.5 | 91 | -31 |
| 0.25 | 87 | -20 |
| 0.13 | 83 | -13 |
| After aging overnight | | |
| 1.5 | 95 | -60 |
| 1 | 93 | -48 |
| 0.5 | 91 | -34 |

(continued)

| After aging overnight | | |
|---|---|---|
| 0.25 | 87 | -22 |
| 0.13 | 83 | -14 |

In all cases, the addition of hydrogen achieves extensive conversion of C2+ hydrocarbons in the feedstock and exhibits exothermic reaction consistent with the desired methanation reaction.

Example 2 (Comparative)

The catalyst of Example 1 was aged for about 1500 hrs in the steam methane reforming (SMR) reaction. The catalyst was then removed and loaded into the reactor of Example 1. The same testing procedure was used as described above. Table 2 shows the results for the second catalyst testing.

Table 2

| Hydrogen stoichiometry, $\lambda$ | $C_3H_8$ conversion | $\Delta T$ |
|---|---|---|
| 1.5 | 30 | -21 |
| 1 | 23 | -14 |
| 0.5 | 13 | -1 |
| 0.25 | 5 | 10 |
| 0.13 | 1 | 12 |
| After aging overnight | | |
| 1.5 | 19 | -11 |
| 1 | 16 | -5 |
| 0.5 | 9 | 3 |
| 0.25 | 4 | 9 |
| 0.13 | 1 | 10 |

For an aged catalyst, the method yields a surprising increase in C2+ hydrocarbon conversion with increasing hydrogen stoichiometry, $\lambda$. Furthermore, the exothermic temperature change increases with increased hydrogen stoichiometry

Example 3

Ten grams of fresh FCR-69-4 catalyst obtained from Sud-Chemie Corporation was loaded into the same test vessel. The same testing procedure was used as described above, with results shown in Table 3. This catalyst has a metal loading of approximately 4 wt % Iridum on an alumina carrier promoted with a mixture of rare earth oxides, namely, $CeO_2$ at 14-20 wt%, $La_2O_3$ at 1-5 wt%, and $Y_2O_3$ at 1-5 wt%, based on amount of catalyst.

Table 3

| Hydrogenation stoichiometry of feed, $\lambda$ | $C_3H_8$ conversion | $\Delta T$ |
|---|---|---|
| 1.5 | 94 | N/A |
| 1 | 92 | N/A |
| 0.5 | 87 | N/A |
| 0.25 | 81 | N/A |
| 0.13 | 76 | N/A |

(continued)

| After aging overnight | | |
|---|---|---|
| 1.5 | 88 | N/A |
| 1 | 86 | N/A |
| 0.5 | 80 | N/A |
| 0.25 | 73 | N/A |
| 0.13 | 67 | N/A |

Example 4

Ten grams of fresh FCR-69-1 catalyst obtained from Sud-Chemie Corporation was loaded into the same test vessel. FCR-69-1 has active metal loading of 1 wt % but is otherwise identical to the FCR-69-4 catalyst of the Example 3. The same testing procedure was used as described above testing, and the results are shown in Table 4. Even with a reduction in metal loading to ¼ of the value in Example 3, extensive conversion of feed was achieved in proportion to the hydrogen stoichiometry.

Table 4

| Hydrogen stoichiometry, $\lambda$ | $C_3H_8$ conversion | $\Delta T$ |
|---|---|---|
| 1.5 | 92 | -66 |
| 1 | 81 | -59 |
| 0.5 | 58 | -34 |
| 0.25 | 20 | 0 |
| 0.13 | 11 | 8 |
| After aging overnight | | |
| 1.5 | 57 | -55 |
| 1 | 54 | -49 |
| 0.5 | 32 | -17 |
| 0.25 | 14 | 2 |
| 0.13 | 6 | 8 |

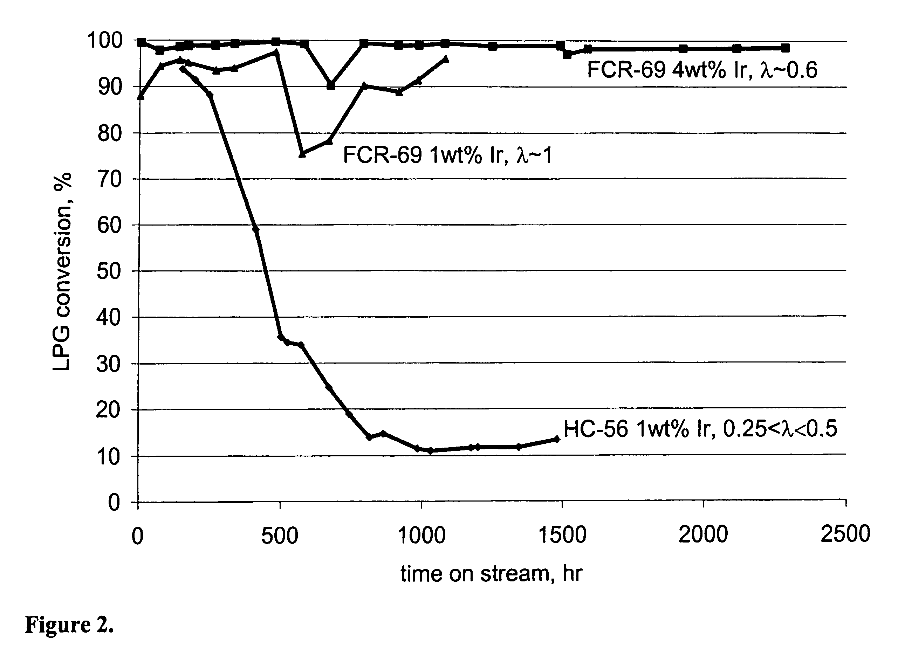

FIG. 2 shows the relative conversion $C_3H_8$ versus time for the rare earth oxide promoted catalyst of Example 3 and 4 versus the unpromoted catalyst of Examples 1 and 2. The rare earth oxide promoted catalyst shows a surprising advantage in deactivation rate compared to the unpromoted catalyst. However, the hydrogen stoichiometry $\lambda$ for the promoted catalysts was uniformly higher than that for the unpromoted catalyst, such that the effects of increased hydrogen stoichiometry and catalyst composition can not be readily separated. In all cases, catalysts provided with hydrogen stoichiometries below the inventive range deactivated within less than two days onstream over multiple tests at different metal loadings and steam to carbon ratios. Both the promoted and unpromoted catalysts possess substantially lower active metal loadings than prior art pre-reforming catalysts. Further, neither catalyst is promoted with alkaline earth promoters with their attendant disadvantages.

**Claims**

1.  A hydrogen production process comprising

- Combining a first feedstream and a second feedstream to produce, in a pre-reforming reactor, a first product comprising $CH_4$ and $H_2O$, wherein

- The first feedstream comprises of $H_2$ and propane, said mixture having a hydrogen stoechiometric ratio ($\lambda$) with $0.2 \leq \lambda \leq 1.5$, the hydrogen stoechiometric ratio ($\lambda$) being defined in terms of molar flow rates, F, to the hydrogen production process as follows:

$$C_x H_y O_z + \left( 2x - \frac{y}{2} + z \right) H_2 \xrightarrow{\text{catalyst}} x CH_4 + z H_2 O$$

$$\lambda = \frac{F_{H_2}}{F_{C_x H_y O_z} \left( 2x - \frac{y}{2} + z \right)}$$

- The second feedstream comprises steam; and
- In the prerefomiing reactor, reaction is conducted using a promoted catalyst having Ir as active metal on alumina, with the promoters being a combination of 14-20 wt% of $CeO_2$, 1-5 wt% of $La_2O_3$, and 1-5 wt% of $Y_2O_3$, and the catalyst being not promoted with an alkaline earth promoter;

- Feeding the first product stream into a reforming reactor; and
- Reacting the first product stream in the reforming reactor to produce a second product stream comprising CO and $H_2$.

2. The hydrogen production process according to Claim 1, wherein $0.25 \leq \lambda \leq 1$.

3. The hydrogen production process according to Claim 1, wherein the first feedstream is produced in a desulphurizing process in which the $H_2$ is combined with propane.

4. The hydrogen production process according to Claim 1, further comprising

- Feeding into the reforming reactor with the first product stream an additional feedstream comprising one or more members selected from the group consisting of steam, air, non-air oxidants, mixtures of desulphurized gases selected from hydrocarbons, carbon oxides, and inert gases.

5. The hydrogen production process according to Claim 1, wherein the molar ratio of steam to carbon atom contained in the first feedstream, S:C is less than 5.

6. The hydrogen production process according to Claim 5, wherein the molar ratio of steam to carbon atom contained in the first feedstream, S:C is less than 4.

7. The hydrogen production process according to Claim 6, wherein the molar ratio of steam to carbon atom contained in the first feedstream, S:C is from 3 to 4.

8. The hydrogen production process according to Claim 1, wherein the catalyst is in a form selected from the group consisting of powders, granulates, tablets, extrudates, and washcoats on ceramic or metallic monoliths or tubular structures.

9. The hydrogen production process according to Claim 1, wherein the first feedstream is introduced into the pre-reforming reactor prior to the second feedstream being introduced.

10. The hydrogen production process according to Claim 1, wherein the second feedstream is introduced into the pre-reforming reactor prior to the first feedstream being introduced.

11. The hydrogen production process according to Claim 1, wherein the first feedstream and second feedstream are introduced into the pre-reforming reactor simultaneously.

12. The hydrogen production process according to Claim 1, wherein the first feedstream and second feedstream are combined prior to introduction into the pre-reforming reactor.

**Patentansprüche**

1.  Wasserstoffherstellungsverfahren umfassend

    - Kombinieren eines ersten Zustromes und eines zweiten Zustromes, um in einem Vorreformierreaktor ein erstes Produkt, umfassend $CH_4$ und $H_2O$, zu erzeugen, wobei

    - der erste Zustrom $H_2$ und Propan umfasst, wobei die Mischung ein stöchiometrisches Verhältnis ($\lambda$) aufweist, mit $0{,}2 \leq \lambda \leq 1{,}5$, wobei das Wasserstoff stöchiometrische Verhältnis ($\lambda$) in Bezug auf die molaren Flussraten, F, zu dem Wasserstoffherstellungsverfahren wie folgt definiert ist:

$$C_x H_y O_z + \left( 2x - \frac{y}{2} + z \right) H_2 \xrightarrow{\text{Katalysator}} xCH_4 + zH_2O$$

$$\lambda = \frac{F_{H_2}}{F_{C_x H_y O_z} \left( 2x - \frac{y}{2} + z \right)}$$

    - der zweite Zustrom Dampf umfasst; und
    - in dem Vorreformierreaktor die Reaktion unter Verwendung eines promotierten Katalysators mit Ir als aktives Metall auf Aluminiumoxid durchgeführt wird, wobei die Promotoren eine Kombination aus 14 bis 20 Gewi.-% $CeO_2$, 1-5 Gew.-% $La_2O_3$, und 1-5 Gew.-% $Y_2O_3$ sind, und der Katalysator nicht mit einem Erdalkali-Promoter promotiert ist;

    - Zuführen des ersten Produktstromes in einen Reformierreaktor; und
    - Reagieren des ersten Produktstromes in dem Reformierreaktor, um einen zweiten Produktstrom, welcher CO und $H_2$, umfasst zu erzeugen.

2.  Wasserstoffherstellungsverfahren nach Anspruch 1, wobei $0{,}25 \leq \lambda \leq 1$.

3.  Wasserstoffherstellungsverfahren nach Anspruch 1, wobei der erste Zustrom in einem Entschwefelungsverfahren erzeugt wird, in welchem das $H_2$ mit Propan kombiniert wird.

4.  Wasserstoffherstellungsverfahren nach Anspruch 1, des Weiteren umfassend

    - Zuführen eines zusätzlichen Zustromes, umfassend ein oder mehrere Elemente gewählt aus der Gruppe bestehend aus Dampf, Luft, Nicht-Luftoxidationsmittel, Mischungen aus entschwefelten Gasen, gewählt aus Kohlenwasserstoffen, Kohlenoxiden und Inertgasen, mit dem ersten Produktstrom in den Reformierreaktor.

5.  Wasserstoffherstellungsverfahren nach Anspruch 1, wobei das Molverhältnis des Dampfes zu dem Kohlenstoffatom, welcher in dem ersten Zustrom enthalten ist, S:C weniger als 5 beträgt.

6.  Wasserstoffherstellungsverfahren nach Anspruch 5, wobei das Molverhältnis des Dampfes zu dem Kohlenstoffatom, welches in dem ersten Zustrom enthalten ist, S:C weniger als 4 beträgt.

7.  Wasserstoffherstellungsverfahren nach Anspruch 6, wobei das Molverhältnis des Dampfes zu dem Kohlenstoffatom, welches in dem ersten Zustrom enthalten ist, S:C 3 bis 4 beträgt.

8. Wasserstoffherstellungsverfahren nach Anspruch 1, wobei der Katalysator in einer Form vorliegt, gewählt aus der Gruppe bestehend aus Pulvern, Granulaten, Tabletten, Extrudaten und Washcoats auf keramischen oder metallischen Monolithen oder rohrförmigen Strukturen.

9. Wasserstoffherstellungsverfahren nach Anspruch 1, wobei der erste Zustrom in den Vorreformierreaktor eingeführt wird, bevor der zweite Zustrom eingeführt wird.

10. Wasserstoffherstellungsverfahren nach Anspruch 1, wobei der zweite Zustrom in den Vorreformierreaktor eingeführt wird, bevor der erste Zustrom eingesetzt wird.

11. Wasserstoffherstellungsverfahren nach Anspruch 1, wobei der erste Zustrom und der zweite Zustrom gleichzeitig in den Vorreformierreaktor eingeführt werden.

12. Wasserstoffherstellungsverfahren nach Anspruch 1, wobei der erste Zustrom und der zweite Zustrom verbunden werden, bevor sie in den Vorreformierreaktor eingeführt werden.


**Revendications**

1. Procédé de production d'hydrogène comprenant

   - la combinaison d'un premier courant d'alimentation et d'un second courant d'alimentation pour produire, dans un réacteur de préreformage, un premier produit comprenant $CH_4$ et $H_2O$, où

     - le premier courant d'alimentation comprend du $H_2$ et du propane, ledit mélange ayant un rapport stoechiométrique d'hydrogène ($\lambda$) avec $0,2 \leq \lambda \leq 1,5$, le rapport stoechiométrique d'hydrogène ($\lambda$) étant défini en termes de débits molaires, F, par rapport au procédé de production d'hydrogène comme suit :

$$C_xH_yO_z + \left(2x - \frac{y}{2} + z\right)H_2 \xrightarrow{\text{catalyseur}} xCH_4 + zH_2O$$

$$\lambda = \frac{F_{H_2}}{F_{C_xH_yO_z}\left(2x - \frac{y}{2} + z\right)}$$

     - le second courant d'alimentation comprend de la vapeur d'eau ; et
     - dans le réacteur de préreformage, la réaction est conduite en utilisant un catalyseur activé ayant Ir en tant que métal actif sur de l'alumine, avec les activateurs étant une combinaison de 14 à 20 % en poids de $CeO_2$, 1 à 5 % en poids de $La_2O_3$, et 1 à 5 % en poids de $Y_2O_3$, et le catalyseur n'étant pas activé avec un activateur à base de métal alcalinoterreux ;

     - le chargement du courant du premier produit dans un réacteur de reformage ; et
     - la réaction du courant du premier produit dans le réacteur de reformage pour produire un courant de second produit comprenant CO et $H_2$.

2. Procédé de production d'hydrogène selon la revendication 1, dans lequel $0,25 \leq \lambda \leq 1$.

3. Procédé de production d'hydrogène selon la revendication 1, dans lequel le premier courant d'alimentation est produit dans un procédé de désulfuration dans lequel le $H_2$ est combiné avec du propane.

4. Procédé de production d'hydrogène selon la revendication 1, comprenant en outre

- le chargement dans le réacteur de reformage avec le courant du premier produit d'un courant d'alimentation supplémentaire comprenant un ou plusieurs membres choisis dans le groupe constitué par la vapeur d'eau, l'air, les oxydants qui ne sont pas de l'air, les mélanges de gaz désulfurés choisis parmi les hydrocarbures, les oxydes de carbone et les gaz inertes.

5.  Procédé de production d'hydrogène selon la revendication 1, dans lequel le rapport molaire de la vapeur d'eau aux atomes de carbone contenus dans le premier courant d'alimentation, S/C est inférieur à 5.

6.  Procédé de production d'hydrogène selon la revendication 5, dans lequel le rapport molaire de la vapeur d'eau aux atomes de carbone contenus dans le premier courant d'alimentation, S/C est inférieur à 4.

7.  Procédé de production d'hydrogène selon la revendication 6, dans lequel le rapport molaire de la vapeur d'eau aux atomes de carbone contenus dans le premier courant d'alimentation, S/C est de 3 à 4.

8.  Procédé de production d'hydrogène selon la revendication 1, dans lequel le catalyseur est sous une forme choisie dans le groupe constitué par les poudres, les granulés, les comprimés, les extrudats, les revêtements (« washcoats ») sur des monolithes céramiques ou métalliques ou des structures tubulaires.

9.  Procédé de production d'hydrogène selon la revendication 1, dans lequel le premier courant d'alimentation est introduit dans le réacteur de préreformage avant l'introduction du second courant d'alimentation.

10. Procédé de production d'hydrogène selon la revendication 1, dans lequel le second courant d'alimentation est introduit dans le réacteur de préreformage avant l'introduction du premier courant d'alimentation.

11. Procédé de production d'hydrogène selon la revendication 1, dans lequel le premier courant d'alimentation et le second courant d'alimentation sont introduits dans le réacteur de préreformage simultanément.

12. Procédé de production d'hydrogène selon la revendication 1, dans lequel le premier courant d'alimentation et le second courant d'alimentation sont combinés avant l'introduction dans le réacteur de préreformage.

FIG. 1

**Figure 2.**

EP 2 137 099 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7037485 B1

- US 20060009352 A1

**Non-patent literature cited in the description**

- **TWIGG et al.** Catalyst Handbook. Manson Publishing, Ltd, 1996, 250-253

- Catalytic Steam Reforming. **ROSTRUP-NIELSEN, J.R.** Catalysis-Science and Technology. Springer-Verlag, 1984